(19) Europäisches Patentamt

European Patent Office

Office européen des brevets

(11) Veröffentlichungsnummer: **0 292 794 B1**

(12) **EUROPÄISCHE PATENTSCHRIFT**

(45) Veröffentlichungstag der Patentschrift: 04.09.91

(21) Anmeldenummer: 88107624.4

(22) Anmeldetag: 11.05.88

(51) Int. Cl.⁵: **F01L 1/04, B21D 39/04**

(54) Hohlwelle aus einem Werkstoff mit geringem Elastizitätsmodul mit duch Aufweiten derselben darauf befestigten Antriebselementen.

(30) Priorität: 25.05.87 DE 3717516

(43) Veröffentlichungstag der Anmeldung:
30.11.88 Patentblatt 88/48

(45) Bekanntmachung des Hinweises auf die
Patenterteilung:
04.09.91 Patentblatt 91/36

(84) Benannte Vertragsstaaten:
BE CH DE ES FR GB IT LI NL SE

(56) Entgegenhaltungen:
EP-A- 265 663
EP-A- 0 089 379
EP-A- 0 213 529
FR-A- 2 328 108
GB-A- 2 050 207

(73) Patentinhaber: **Emitec Gesellschaft für Emissionstechnologie mbH**
**Hauptstrasse 150**
**W-5204 Lohmar 1(DE)**

(72) Erfinder: **Swars, Helmut**
**Riedweg 11**
**W-5060 Bergisch Gladbach 1(DE)**
Erfinder: **Maus, Wolfgang, Dipl.-Ing.**
**Gut Horst**
**W-5060 Bergisch Gladbach 1(DE)**
Erfinder: **Schulze, Rudolf-Jochen**
**Hohr Fuhr 6B**
**W-5203 Much(DE)**

(74) Vertreter: **Neumann, Ernst Dieter, Dipl.-Ing.**
**HARWARDT NEUMANN PATENTANWÄLTE**
**Scheerengasse 2 Postfach 1455**
**W-5200 Siegburg(DE)**

## Beschreibung

Die vorliegende Erfindung betrifft ein Verfahren zur Herstellung einer gebauten Antriebswelle, bestehend aus einer Hohlwelle mit durch Aufweiten derselben darauf befestigten Antriebselementen.

In der EP-A- 0 213 529 wird ein Verfahren zum Befestigen von Antriebselementen, wie Nocken, Zahnrädern oder Lagerelementen auf einer Hohlwelle beschrieben, das durch hydraulisches Aufweiten derjenigen Wellenabschnitte eine sichere Befestigung der Antriebselemente erreicht, die diesen gegenüberliegen.

In der EP 0 265 663 wird darüber hinaus angegeben, daß im Verlaufe des Aufweitvorganges das Material der Hohlwelle plastisch, dasjenige der Antriebselemente jedoch nur elastisch verformt werden soll; das Rückfedern des letzteren nach Wegfallen des Aufweitdruckes sorgt dann für den notwendigen Anpreßdruck. Hierbei wurden die Werkstoffe von Hohlwelle und Antriebselementen mit ihren Kenndaten je für sich betrachtet. Da für die Antriebselemente, insbesondere Nocken, zunächst erprobte Werkstoffe wie Sintermetall, Schalenhartguß oder hochfeste Stähle (die soweit erforderlich an ihrer Oberfläche gehärtet wurden) verwendet wurden und für die Hohlwelle geringerwertige normale Maschinenbaustähle, führte das Verfahren zu befriedigenden Ergebnissen. Bei Versuchen, zur weiteren Gewichtsreduzierung der fertigen Wellen, die die Grundlage bildende Hohlwelle aus einem leichteren Werkstoff, z.B. einer Aluminiumlegierung oder Titan herzustellen, d.h. aus Werkstoffen, die einen geringen Elastizitätsmodul aufweisen, versagten die bis dahin benutzten, mehr empirisch gefundenen Werte.

Aufgabe der vorliegenden Erfindung ist die Angabe einer Bemessungsregel, die es dem Fachmann gestattet als Werkstoff für die Hohlwelle einen solchen mit geringem, d.h. deutlich unter demjenigen von Stahl liegenden Elastizitätsmodul zu wählen und gleichzeitig einen geeigneten Werkstoff für die Antriebselemente zu bestimmen, so daß das oben bezeichnete Befestigungsverfahren mit befriedigenden Ergebnissen abläuft.

Die Lösung dieser Aufgabe erfolgt durch die Einhaltung der im kennzeichnenden Teil des Patentanspruchs angegebenen Regel.

Die an sich mögliche Anwendung dieser Regel auf andere bekannte Verfahren der Befestigung von Antriebselementen auf Wellen, z.B. durch Aufschrumpfen führt zu praktisch nicht realisierbaren Werten, z.B. zu einem für das Aufschieben der Elemente zu geringem Spiel zwischen den Partnern.

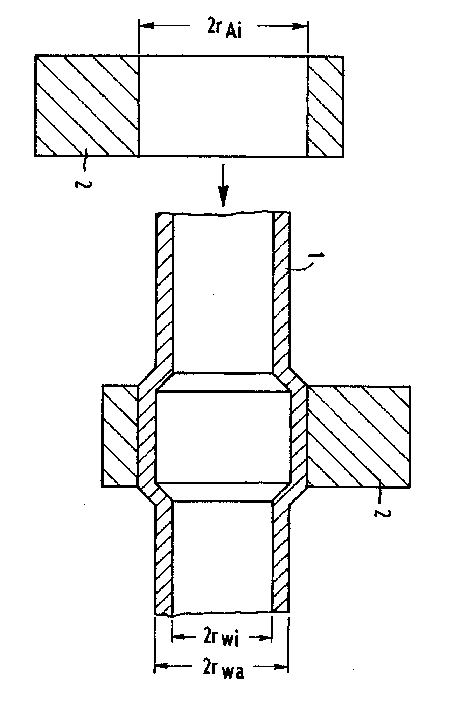

Ein Ausführungsbeispiel der Erfindung ist in der Zeichnung dargestellt, und zwar im Längsaxialschnitt. Auf eine Hohlwelle 1 aus einer Aluminiumlegierung sind Nocken 2 aufgeschoben und durch anschließendes Aufweiten der ersteren in den den Nocken korrespondierenden Bereich befestigt worden. Dabei ist das Maß der Aufweitung zur Verdeutlichung übertrieben groß dargestellt worden.

## Patentansprüche

1. Verfahren zur Herstellung einer gebauten Antriebswelle, bestehend aus einer Hohlwelle mit durch Aufweiten derselben darauf befestigten Antriebselementen,

dadurch gekennzeichnet,

daß $E_w < 150000$ N/mm$^2$ und

$$\text{daß} \quad \sigma_{F_A} \geq 0,6 \, \sigma_{F_W} \frac{E_A}{E_W} \left[ \left( \frac{r_{wa}}{r_{wi}} \right)^2 - 1 \right],$$

und daß vor dem Aufweiten der Hohlwelle

$$r_{Ai} - r_{wa} \geq \frac{\sigma_{F_W}}{E_W} \cdot r_{wa} \quad \text{ist},$$

worin

$$\sigma'_{F_A}$$

die Fließgrenze und $E_A$ der Elastizitätsmodul des Werkstoffes der Antriebselemente,

$$\sigma'_{F_W}$$

bzw. $E_w$ diejenigen des Werkstoffs der Welle in N/mm² sowie $r_{wa}$ den Außenradius und $r_{wi}$ den Innenradius der Welle und $r_{Ai}$ den Innenradius des Antriebselementes bedeuten.

## Claims

1. A method of manufacturing an assembled driveshaft consisting of a hollow shaft with driving elements affixed thereto by means of expansion,

   characterised in

   that $E_w$ < 150000 N/mm² and

$$that \quad \sigma_{F_A} \le 0.6 \quad \sigma_{F_w} \frac{E_A}{E_w} \left[ \left( \frac{r_{wa}}{r_{wi}} \right)^2 - 1 \right] , \quad and$$

   that prior to expanding the hollow shaft

$$r_{Ai} - r_{wa} \ge \frac{\sigma_{F_w}}{E_w} \times r_{wa} ,$$

   with

$$\sigma_{F_A}$$

   being the yield point and $E_A$ the modulus of elasticity of the material of the driving elements, with

$$\sigma_{F_w}$$

   and $E_w$ being the respective values of the material of the shaft in N/mm², and with $r_{wa}$ being the outer radius and $r_{wi}$ the inner radius of the shaft and $r_{Ai}$ the inner radius of the driving elements.

## Revendications

1. Procédé de fabrication d'un arbre d'entraînement assemblé consistant en un arbre creux sur lequel sont fixés par élargisse-ment de celui-ci des éléments d'entraînement,
   caractérisé en ce que,
   $E_w$ < 150000 N/mm² et
   en ce que

$$\sigma_{F_A} \geq 0,6 \ \sigma_{F_W} \frac{E_A}{E_W} \left[ \left(\frac{r_{wa}}{r_{wi}}\right)^2 - 1 \right],$$

et en ce que, avant l'élargissement de l'arbre creux,

$$r_{Ai} - r_{wa} \geq \frac{\sigma_{F_W}}{E_W} \cdot r_{wa},$$

$$\sigma_{F_A}$$

étant à la limite apparente d'élasticité et $E_A$ étant le module d'élasticité du matériau des éléments d'entraînement,

$$\sigma_{F_W}$$

et $E_W$ étant la limite apparente d'élasticité et te module d'élasticité du matériau de l'arbre en N/mm², $r_{wa}$ étant le rayon externe et $r_{wi}$ étant le rayon interne de l'arbre et $r_{Ai}$ étant le rayon interne de l'élément d'entraînement.